# EUROPEAN PATENT SPECIFICATION

(11) **EP 3 707 091 B1**
(45) Date of publication and mention of the grant of the patent: **19.07.2023**
(21) Application number: 18812394.7
(22) Date of filing: 06.11.2018
(51) Int. Cl.: B65H 75/14, B65H 75/28, B60L 53/18

(54) **REEL DEVICE**
SPULENVORRICHTUNG
DISPOSITIF D'ENROULEMENT

(30) Priority: 07.11.2017 NL 1042631
(43) Date of publication of application: 16.09.2020
(73) Proprietor: Pot, Arjen, 1069 CL Amsterdam (NL)
(72) Inventor: Pot, Arjen, 1069 CL Amsterdam (NL)
(74) Representative: EP&C
(86) International application number: PCT/NL2018/050739
(87) International publication number: WO 2019/093884

(56) References cited:
- EP-A1- 2 763 257
- WO-A1-2012/153359
- WO-A1-2013/125573
- DE-A1- 2 752 088
- DE-A1-102011 006 630
- US-B2- 8 558 504

## Description

The invention relates to the field of reel devices, in particular to reel devices for electric cables used for vehicles such as electric vehicles.

### BACKGROUND OF THE INVENTION

With the emergence of electric vehicles, also electric cables used for charging those electric vehicles emerged. In order to charge the electric vehicle, the electric cable is connected at one end to a charging station, and at an opposite end to the electric vehicle.

Usually each electric vehicle comes with its own electric cable. This cable comprises a car plug at one end of the cable, and a charging station plug at the opposite end of the cable. It is not unusual to leave the electric cable in the car when the cable is not used for charging. However, properly storing the electric cable in the car or elsewhere is a hassle.

A solution is to just throw the electric cable in the trunk, or on the backseat of the vehicle. Although this way of storing the cable requires the least amount of work, the cables will generally become tangled. Such tangling is not desired, because it damages the cable, especially when the cable buckles. In order to untangle the tangled cable, the user has to spend a frustrating amount of time. On average, this solution is therefore not time efficient. It is also not space efficient, as the electric cable will take a large area of the trunk or the backseat of the vehicle.

Another solution is winding the electric cable around an object, for example a cylinder. This way, there is less chance for the electric cable to become tangled, or buckled. A disadvantage however is that when the electric cable is completely wound about the object, the user ends up with at least one free end of the cable. This free end is not restricted, and consequently the cable tends to unwind itself when the car in which it is stored is moving, for example when making turns, or going over bumps.

Yet another solution for storing the electric cable is to use a reel device, wherein the electric cable is reeled about a cylinder, and restricted by two flanges at the ends of the cylinder. The problem with restricting at least one free end of the electric cable also applies to this solution, resulting in undesired unreeling of the cable. When the electric vehicle needs to be charged, the user will find the electric cable detached from the reel device, instead of retained by the reel device.

Patent Application EP 2 763 257 A1 discloses a reel device for an electric car charging cable according to the preamble of claim 1.

### SUMMARY OF THE INVENTION

It would be desirable to provide a reel device, in particular for storing an electric cable, in particular an electric cable for use in charging an electric vehicle, which reel device better retains the electric cable. It would further be desirable to provide a reel device which is space efficient.

To better address one or more of these concerns, in a first aspect of the invention a reel device for storing an electric cable, in particular an electric cable of a vehicle such as an electric vehicle, as described in claim 1 is provided.

An advantage of the reel device is that due to the cable retainer, the electric cable may be stored in a better way. Because the cable retainer is movable to the target position, it is possible to engage the first plug or the one end of the electric cable independently from where the first plug or the one end of the electric cable ends when the electric cable is fully reeled on the storage part. It is rather unpredictable at which position relative to the storage part the electric cable will end, as that depends on how the electric cable is reeled. The electric cable may be loosely reeled or tightly reeled. In addition, the electric cable may have limited overlaps, or relatively frequent overlaps with respect to underlying cable sections. Such variables influence the target position of the first plug or the one end of the electric cable relative to the storage part. The present invention solves this problem.

In an embodiment of the reel device, at least a part of the bridge section is adjustable in an adjustment direction perpendicular to the central axis, for adjusting the radial distance (D) between the outer surface of the central member and the inner engagement surface in order to clamp cables or plugs of different lengths and/or different diameters.

An advantage of being able to adjust the radial distance (D) is a more flexible reel device, as the reel device may accommodate electric cables of varying lengths and/or diameters. Different cables may have different lengths and thicknesses, and different plugs may have varying shapes. The radial distance may be adjusted for the cable retainer to fulfil its function in such varying circumstances.

In an embodiment of the reel device, the bridge section comprises a bridge beam and an adjustment member which is connected to the bridge beam, wherein the adjustment member comprises the inner engagement surface and is movable in a radial direction relative to the bridge beam for adjusting the radial distance (D) between the outer surface of the central member and the inner engagement surface.

In an embodiment of the reel device, the adjustment member is resilient. When the inner engagement surface engages the electric cable or plug, the resilience of the adjustment member allows for a tighter clamping action, as the adjustment member biases, or pushes, the cable or plug on the underlying cable section. This clamping action is beneficial for restricting movement of the electric cable.

In an embodiment of the reel device, the adjustment member comprises a bracket comprising the inner engagement surface, wherein the bracket comprises at least one guide member, which at least one guide member projects substantially transverse from a side of the bracket.

In embodiment of the reel device, an opposite surface of the bracket with respect to the inner engagement surface is provided with a connecting member, the connecting member being configured to connect the bracket to the inner side of the bridge beam, and wherein, when the bracket is connected to the inner side of the bridge beam, the guide member extends substantially parallel to the flanges.

In an embodiment of the reel device, the guide member comprises a plate part, and at least one curved part provided at an end of the plate part, wherein, when the bracket is connected to the inner side of the bridge beam, the plate part extends substantially parallel to the flanges, and the curved part extends away from the plate part toward the nearest flange.

An advantage of the guide member is that the first plug or the one end of the cable is engaged from different sides, allowing for a better retention and thus a better storage.

The adjustment member may be exchangeable, wherein a first adjustment member comprises a first bracket having a first height (h1), and a second adjustment member comprises a second bracket having a different height (h2).

Having an exchangeable adjustment member provides a flexible reel device, because the exchangeability allows the reel device to be easily adjustable for electric cables of different lengths and/or diameters.

According to the invention, the reel device further comprises a hub member supported by the central member, the hub member and the storage part being configured to rotate relative to each other.

The relative rotation between the hub member and the storage part facilitates an easy usage of the reel device, as a user may hold the hub member with one hand, and rotate the storage part with the other hand.

In an embodiment of the reel device, the central member, the hub member, and the cable retainer are independently rotatable relative to one another.

In an embodiment of the reel device, the hub member is located inside the central member and is coaxially arranged with the central member.

In an embodiment of the reel device, the cable retainer comprises a radial member which is connected to the hub member and extends radially outwards from the hub member, and wherein the radial member supports the bridge section. This arrangement provides a simple structure.

In an embodiment of the reel device, the radial member extends parallel to the first outer surface of the first flange. This allows for a compact structure.

In an embodiment of the reel device, the reel device comprises only a single radial member, wherein the bridge section comprises a free end opposite to an end of the bridge section which is connected to the radial member, wherein the free end engages the second outer edge or forms a gap between the free end and the second outer edge.

In an embodiment of the reel device, the bridge section is connected to the radial member via a hinge and is pivotable about a hinge axis relative to the radial member between a closed position in which the cable is held on the reel device and an open position which allows the cable to be unspooled from the reel device or to be spooled onto the reel device, wherein in particular the hinge axis extends tangentially to the first or second outer edge of the first or second flange.

In an embodiment of the reel device, the bridge section forms a bridge between the first outer edge and the second outer edge, the bridge being completely closed or wherein a gap is defined between the bridge section and the first and/or second outer edge.

In an embodiment of the reel device, the bridge section is curved, wherein a central part of the bridge section is located further away from the outer surface of the central member than parts of the bridge section which are closer to the first and second outer edge.

The curvature provides more space between the central part of the bridge section and the outer surface of the central member in order to accommodate the first plug or the one end of the electric cable.

In an embodiment of the reel device, a recess is provided in the second flange, the recess extending inwards from the second outer edge.

An advantage of the recess is that the second plug of the electric cable may be stored outside of the storage part, while allowing the electric cable to be smoothly guided through the recess and on the storage part.

In an embodiment of the reel device, the recess has a depth (d) which is at least equal to 50% of a height (h) of the second flange from the outer surface of the central member.

An advantage of a recess which extends to near the central member, thus having a depth (d) being close to the height (h) of the second flange, is that the electric cable has a smoother transition from outside the storage part onto the central member. Buckling of the cable is thereby limited.

In an embodiment of the reel device, a plug retaining unit is provided on the second flange, the plug retaining unit being configured for accommodating and holding at least part of the second plug or the opposite end of the electric cable.

In an embodiment of the reel device, the plug retaining unit comprises a hole having a hole axis which is oriented substantially perpendicular to the central axis, wherein the hole has a mating shape which corresponds with a shape of the second plug.

In an embodiment of the reel device, a first handle member is provided on the second outer surface of the second flange, the first handle member extending outwards from the second outer surface, wherein the first handle member is configured to be engaged by the user and to facilitate a rotation of the storage part about the central axis.

In an embodiment of the reel device, the hub member comprises a second handle member, the second handle member being configured to be engaged by the user.

The handle members, both the first and the second, are beneficial from a point of view of user friendlyness. They facilitate easy rotation of the storage part relative to the hub member.

In an embodiment of the reel device, the second handle member comprises an element extending from one section of the hub member to an opposite section of the hub member.

In a second aspect of the invention, an assembly is provided of the reel device and a separate docking member, the docking member comprising a base which is configured to be attached to the electric vehicle, in particular to an inside of a trunk of the electric vehicle, the docking member comprising a protruding section which protrudes from the base and which is configured to be inserted into an inner space defined within the central member, the inner space being more in particular defined within the hub member.

In an embodiment of the assembly, the docking member comprises a first coupling part, wherein the reel device comprises a second coupling part, wherein the first and second coupling part form a coupling which allows the reel device to be secured to the docking member.

In an embodiment of the assembly, said inner space is accessible via an opening, wherein said opening is located on a side of the reel device which is opposite to a side of the reel device on which the plug retaining unit is located.

In an embodiment of the assembly, the base comprises a base surface covered with Velcro.

An advantage of the assembly is that the reel device may be better stored in the electric vehicle, without a risk of getting kicked around the inside of the vehicle during driving. The Velcro base surface provides a simple structure, as interiors of trunks of vehicles usually are provided with a material that allows for a Velcro connection. The assembly may therefore be attached to and detached from multiple locations inside the trunk, according to the needs of the user.

These and other aspects of the invention will be more readily appreciated as the same becomes better understood by reference to the following detailed description and considered in connection with the accompanying drawings in which like reference symbols designate like parts.

### BRIEF DESCRIPTION OF THE FIGURES

Figure 1 schematically shows a perspective view of an embodiment of a reel device according to the present invention, the reel device carrying an electric cable comprising plugs.
Figure 2 schematically shows a another perspective view of the embodiment of figure 1, the reel device still carrying the electric cable comprising plugs.
Figure 3 schematically shows a cross-sectional view of figure 2, without an electric cable.
Figure 4 schematically shows a perspective view of an embodiment of an assembly of the reel device and a separate docking member according to the present invention, the reel device carrying the electric cable comprising plugs.
Figure 5 schematically shows a perspective view of different embodiments of an adjustment member.

### DETAILED DESCRIPTION OF THE FIGURES

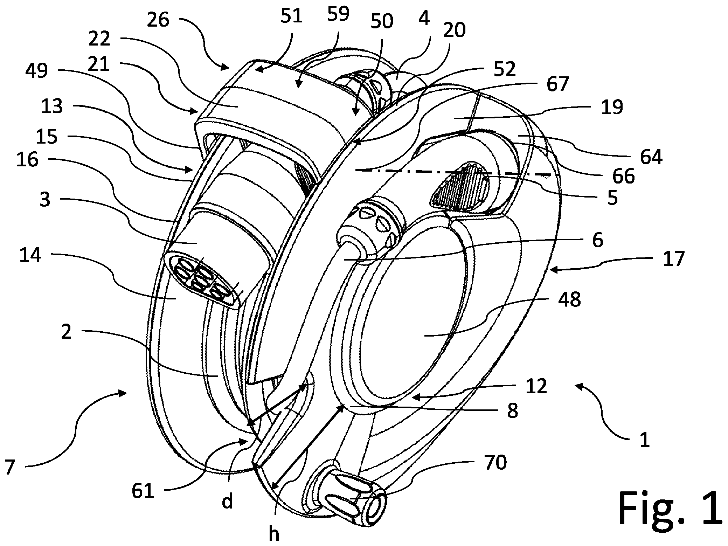

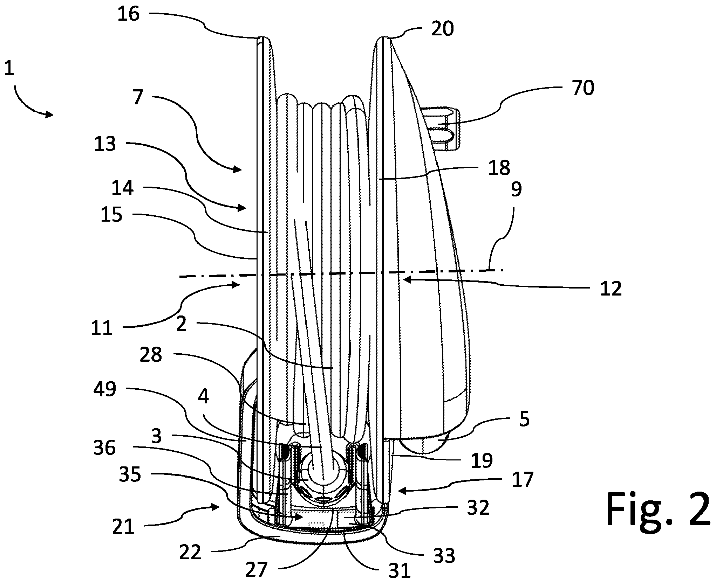

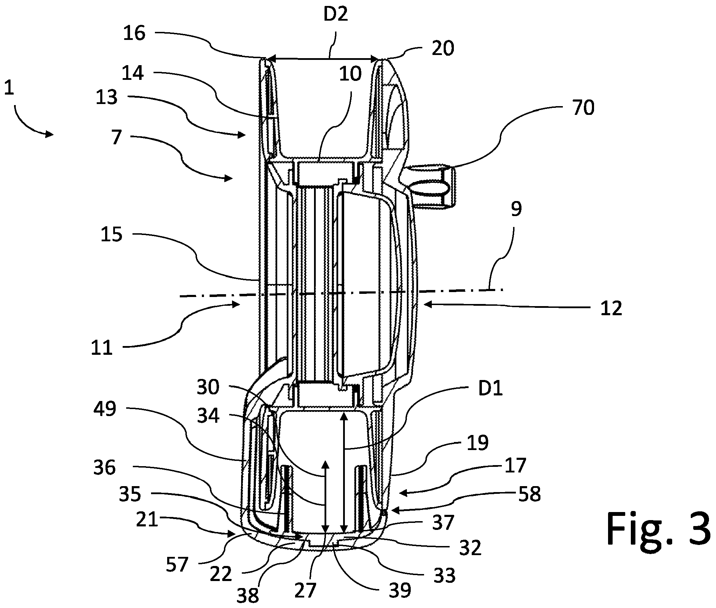

Figures 1 and 2 schematically show views of an example embodiment of a reel device 1 for storing an electric cable 2, in particular an electric cable of a vehicle such as an electric vehicle. The electric cable 2 has a first plug 3 at one end 4 and a second plug 5 at an opposite end 6. The reel device 1 has a storage part 7. The storage part 7 has a central member 8 having a central axis 9. The central member 8 is cylindrical. The storage part 7 further has outer surface 10 (see figure 3), a first end 11 and a second end 12. At the first end 11 of the central member 8 a first flange 13 is provided. The first flange 13 has a first inner surface 14, a first outer surface 15, and a first outer edge 16. At the second end 12 of the central member 8 a second flange 17 is provided which second flange 17 has a second inner surface 18, a second outer surface 19, and a second outer edge 20. The second inner surface 18 faces the first inner surface 14 of the first flange 13. The storage part 7 is configured to accommodate the electric cable 2 on the central member 8 between the first flange 13 and the second flange 17.

The reel device 1 further comprises a hub member 48 which is supported by the central member 8. The hub member 48 and the storage part 7 being configured to rotate relative to each other.

It is also possible that the central member 8, the hub member 48, and the cable retainer 21 are independently rotatable relative to one another.

The hub member 48 is located inside the central member 8 and is coaxially arranged with the central member 8. As the central member 8 defines a circular hole, the hub member 48 fits tightly in the circular hole, for the outer circumference of the hub member 48 is also circular.

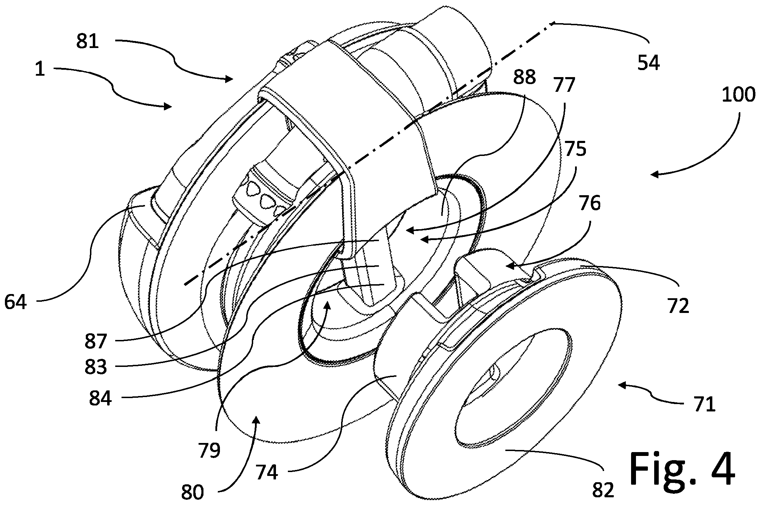

The hub member 48 further has an outer frame 88 and an inner frame 87 (figure 4). The outer frame 88 is in contact with the central member 8, in particular with the inner surface of the central member 8. The inner frame 87 defines a second handle member 83, which is configured to be engaged by the user. The second handle member 83 extends from one section of the hub member 48 to an opposite section of the hub member 48. The second handle member 83 is in the shown embodiment a beam which extends through the central axis 9. Other configurations of the inner frame 87 are also possible. During usage of the reel device 1, the user grabs the second handle member 83 with one hand, and rotates the storage part 7 with the other hand, using a first handle member 70.

The user will in particular use the other hand to grab the first handle member 70. The first handle member 70 is provided on the second outer surface 19 of the second flange 17. The first handle member 70 extends outwards from the second outer surface 19. The first handle member 70 is thus configured to be engaged by the user and to facilitate a rotation of the storage part 7 about the central axis 9.

A recess 61 is provided in the second flange 17. The recess 61 extends inwards from the second outer edge 20. The recess 61 decreases in width as it extends inwards. This way a substantial V-shaped recess 61 is defined.

The recess 61 has a depth d which is at least equal to 50% of a height h of the second flange 17.

The second flange 17 is provided with a plug retaining unit 64. The plug retaining unit 64 accommodates and holds at least part of the second plug 5. In a different embodiment, the plug retaining unit 64 may accommodate and hold the opposite end 6 of the electric cable 2.

The plug retaining unit 64 comprises a hole 66 having a hole axis 67 which is oriented substantially perpendicular to the central axis 9. The hole 66 has a shape which at least partly complements a shape of the second plug 5. This way, the second plug 5 can be made to fit tightly in the plug retaining unit 64.

Turning to figures 2 and 3, the reel device 1 has a cable retainer 21. The cable retainer 21 has a bridge section 22 which is provided at a radial distance (D1) outwards from the outer surface 10 of the central member 8. The bridge section 22 extends over a distance (D2) between the first outer edge 16 and the second outer edge 20. Furthermore, the bridge section 22 extends substantially parallel to the central axis 9 of the central member 8 at the radial distance (D1).

The cable retainer 21 is configured to be movable in a circumferential direction relative to the storage part 7 to a target position 26 and to engage the first plug 3 or the one end 4 of the electric cable 2 with an inner engagement surface 27 of the bridge section 22 when the electric cable 2 is fully reeled on the storage part 7. This way, the first plug 3 or the one end 4 of the electric cable 2 is clamped between the cable retainer 21 and an underlying cable section 28 of the electric cable 2 in said target position 26.

The bridge section 22 extends substantially parallel to the central axis 9 of the central member 8 at the radial distance (D1).

At least a part of the bridge section 22 may be adjustable in an adjustment direction 30 perpendicular to the central axis 9. This way, the radial distance (D1) may be adjusted between the outer surface 10 of the central member 8 and the inner engagement surface 27 in order to clamp cables or plugs of different lengths and/or different diameters.

The bridge section 22 comprises a bridge beam 31 and an adjustment member 32 which is connected to an inner side 33 of the bridge beam 31. In other configurations the adjustment member may be connected elsewhere on the bridge beam. The adjustment member 32 comprises the inner engagement surface 27 and is movable in a radial direction relative to the bridge beam 31. This way, the radial distance (D1) between the outer surface 10 of the central member 8 and the inner engagement surface 27 may be adjusted.

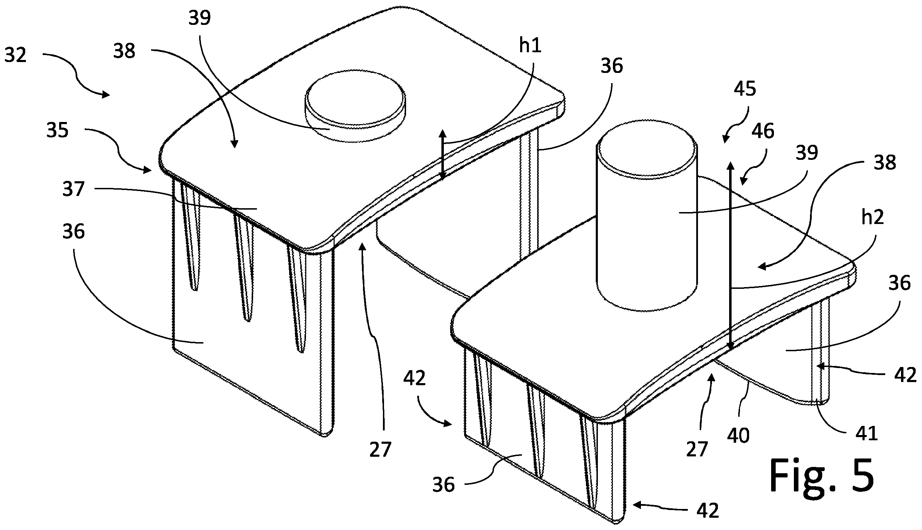

In the shown embodiment, the adjustment member 32 comprises a bracket 35. This is also shown in figure 5, wherein two embodiments of the adjustment member are shown. The bracket 35 comprises the inner engagement surface 27 and at least one guide member 36. The at least one guide member 36 projects substantially transverse from a side 37 of the bracket 35. An opposite surface 38 of the bracket 35 with respect to the inner engagement surface 27 is provided with a connecting member 39. The connecting member 39 connects the bracket 35 to the inner side 33 of the bridge beam 31. When the bracket 35 is connected to the inner side 33 of the bridge beam 31, the guide member 36 extends substantially parallel to the flanges. The connecting member 39 may differ in height in order to adjust the radial distance (D1) between the outer surface 10 of the central member 8 and the inner engagement surface 27.

Zooming in on the guide member 36, the guide member 36 has a plate part 40, and a curved part 41 provided at both ends 42 of the plate part 40. It is also possible to have only one curved part 41. When the bracket 35 is connected to the inner side 33 of the bridge beam 31, the plate part 40 extends substantially parallel to the flanges, and the curved part 41 extends away from the plate part 40 toward the nearest flange. The height of the guide members may also be varied in order to accommodate plugs or cables of different dimensions.

The adjustment member 32 may be exchangeable. This way, the reel device 1 may be converted from the first adjustment member 32 comprising a first bracket 35 having a first height (h1) to a second adjustment member 45 comprising a second bracket 46 having a different height (h2), and vice versa. The desired height of the bracket 35 depends on the length and/or the diameter of the electric cable 2 and/or plug. In figure 5, the heights h1, h2 are measured from the top of the connecting member 39 to the inner engagement surface 27.

The cable retainer 21 has a radial member 49 which is connected to the hub member 48 and extends radially outwards from the hub member 48. The radial member 49 supports the bridge section 22.

In the shown embodiment, the radial member 49 extends parallel to the first outer surface 15 of the first flange 13.

Only a single radial member 49 is provided. This way, the bridge section 22 comprises a free end 50 opposite to an end 51 of the bridge section 22 which is connected to the radial member 49. The free end 50 forms a gap 52 between the free end 50 and the second outer edge 20. It is also possible that the free end 50 engages the second outer edge 20.

The bridge section 22 may form a bridge between the first outer edge 16 and the second outer edge 20. The bridge may be completely closed or a gap may be defined between the bridge section 22 and the first and/or second outer edge 20. In the latter case the gap may be smaller than 5 mm or at least smaller than a diameter of the electric cable to prevent the electric cable to escape from the storage part 7.

In another embodiment, the bridge section 22 may be connected to the radial member 49 via a hinge. Then, the bridge section 22 is pivotable about a hinge axis 54 relative to the radial member 49 between a closed position in which the cable is held on the reel device 1 and an open position which allows the cable to be unspooled from the reel device 1 or to be spooled onto the reel device 1. The hinge axis 54 extends tangentially to the first or second outer edge 20 of the first or second flange 17. In this embodiment, the cable retainer 21 may comprise a locking device for locking the bridge section 22 in the closed position.

The bridge section 22 is curved and a central part 59 of the bridge section 22 is located further away from the outer surface 10 of the central member 8 than parts 60 of the bridge section 22 which are closer to the first and second outer edge 20.

Turning to figure 4, an assembly 100 of the reel device 1 and a separate docking member 71 is shown. The docking member 71 has a base 72, of which a base surface 82 may be covered with Velcro. The base 72 is configured to be attached to the electric vehicle, in particular to an inside of a trunk of the electric vehicle. The docking member 71 has a protruding section 74 which protrudes from the base 72. The protruding section 74 is configured to be inserted into an inner space 75 defined within the central member 8. The inner space 75 is particularly defined within the hub member 48.

The docking member 71 has a first coupling part 76, wherein the reel device 1 comprises a second coupling part 77. The first and second coupling part 77 form a coupling 78 which allows the reel device 1 to be secured to the docking member 71.

The inner space 75 is accessible via an opening 79. Said opening 79 is located on a side of the reel device 1 which is opposite to a side of the reel device 1 on which the plug retaining unit 64 is located. However, the opening 79 may also be a through hole, such that the inner space 75 is accessible via both sides of the reel device 1.

In use the reel device 1 will form an assembly 100 with the electric cable 2. It will be clear to the skilled person that the reel device 1 may be sold without the electric cable 2.

As explained in detail above, a reel device 1 for storing an electric cable 2, in particular an electric cable 2 of a vehicle such as an electric vehicle is provided. It is to be understood that the reel device 1 may also be used for storing an electric cable of another vehicle, such as for example a boat. In case of a boat, the electric cable 2 is called a shore cable. The shore cable is used to charge a battery of the boat. The reel device 1 comprises a storage part 7 configured to accommodate the electric cable 2 on a central member 8 and between a first and second flange 17 thereof. A cable retainer 21 is provided comprising a bridge section 22 which is provided at a radial distance (D) outwards from the outer surface 10 of the central member 8. The bridge section 22 extends over a distance between a first outer edge 16 and a second outer edge 20 of the first and second flange 17, respectively. The cable retainer 21 is configured to be movable in a circumferential direction relative to the storage part 7 to a target position 26 and to engage the first plug 3 or electric cable 2 with an inner engagement surface 27 of the bridge section 22 when the electric cable 2 is fully reeled on the storage part 7. This way a first plug 3 provided at an end of the electric cable 2 or the electric cable 2 itself is clamped between the cable retainer 21 and an underlying cable section 28 of the electric cable 2 in said target position 26.

It is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention. Further, the terms and phrases used herein are not intended to be limiting, but rather, to provide an understandable description of the invention.

The terms "a"/"an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other element 84s or steps). Any reference signs in the claims should not be construed as limiting the scope of the invention which is defined by the appended claims.

## Claims

1. Reel device (1) for storing an electric cable (2), in particular an electric cable of a vehicle such as an electric vehicle, said electric cable comprising a first plug (3) at one end (4) of the cable and a second plug (5) at an opposite end (6) of the cable, the reel device comprising:
- a storage part (7) comprising:
- a central member (8) having a central axis (9), wherein the central member comprises an outer surface (10), a first end (11) and a second end (12),
- a first flange (13) provided at the first end of the central member, the first flange comprising a first inner surface (14), a first outer surface (15), and a first outer edge (16),
- a second flange (17) provided at the second end of the central member, the second flange comprising a second inner surface (18), a second outer surface (19), and a second outer edge (20), wherein the second inner surface faces the first inner surface of the first flange, wherein the storage part is configured to accommodate the electric cable on the central member between the first flange and the second flange,
- a cable retainer (21), the reel device being **characterised in that** the cable retainer comprises a bridge section (22) which is provided at a radial distance (D1) outwards from the outer surface of the central member, wherein the bridge section extends over a distance (D2) between the first outer edge and the second outer edge, wherein the cable retainer is configured to be movable in a tangential direction relative to the storage part to a target position (26) and to engage the first plug or the one end of the electric cable with an inner engagement surface (27) of the bridge section when the electric cable is reeled on the storage part, thereby clamping the first plug or the one end of the electric cable between the cable retainer and an underlying cable section (28) of the electric cable in said target position, the reel device being further **characterised by** comprising
- a hub member (48) supported by the central member, the hub member and the storage part being configured to rotate relative to each other.

2. Reel device according to claim 1, wherein at least a part of the bridge section is adjustable in an adjustment direction (30) perpendicular to the central axis of the central member, for adjusting the radial distance (D1) between the outer surface of the central member and the inner engagement surface of the cable retainer for clamping different types of electric cables or plugs thereof.

3. Reel device according to claim 2, wherein the bridge section comprises a bridge beam (31) and an adjustment member (32) which is connected to the bridge beam, wherein the adjustment member comprises the inner engagement surface and is movable in a radial direction (34) relative to the bridge beam for adjusting the radial distance (D1) between the outer surface of the central member and the inner engagement surface.

4. Reel device according to any one of the preceding claims, wherein the central member, the hub member, and the cable retainer are independently rotatable relative to one another around the central axis.

5. Reel device according to any one of the preceding claims, wherein the hub member is located inside the central member and is coaxially arranged with the central member.

6. Reel device according to any one of the preceding claims, wherein the cable retainer comprises a radial member (49) which is connected to the hub member and extends radially outwards from the hub member, and wherein the radial member supports the bridge section.

7. Reel device according to any one of the preceding claims, wherein the bridge section forms a bridge between the first outer edge and the second outer edge, wherein the bridge is completely closed or wherein a gap is defined between the bridge section and the first and/or second outer edge.

8. Reel device according to any one of the preceding claims, wherein a recess (61) is provided in the second flange, the recess extending inwards from the second outer edge.

9. Reel device according to the previous claim, wherein the recess has a depth (d) which is at least equal to 50% of a height (h) of the second flange.

10. Reel device according to any one of the preceding claims, wherein a plug retaining unit (64) is provided on the second flange, the plug retaining unit being configured for accommodating and holding at least part of the second plug or the opposite end of the electric cable.

11. Reel device according to the previous claim, wherein the plug retaining unit comprises a hole (66) having a hole axis (67) which is oriented substantially perpendicular to the central axis, wherein the hole has a complementary shape to a shape of the second plug.

12. Reel device according to any one of the preceding claims, wherein a first handle member (70) is provided on the second outer surface of the second flange, the first handle member extending outwards from the second outer surface, wherein the first handle member is configured to be engaged by the user and to facilitate a rotation of the storage part about the central axis.

13. Reel device according to any one of the preceding claims, wherein the hub member comprises a second handle member (83), the second handle member being configured to be engaged by the user.

14. Reel device according to the previous claim, wherein the second handle member comprises an element (84) extending from one section (85) of the hub member to an opposite section (86) of the hub member.

15. Assembly (100) of a reel device (1) for storing an electric cable (2), in particular an electric cable of a vehicle such as an electric vehicle, said electric cable comprising a first plug (3) at one end (4) of the cable and a second plug (5) at an opposite end (6) of the cable, the reel device comprising:
- a storage part (7) comprising:
- a central member (8) having a central axis (9), wherein the central member comprises an outer surface (10), a first end (11) and a second end (12),
- a first flange (13) provided at the first end of the central member, the first flange comprising a first inner surface (14), a first outer surface (15), and a first outer edge (16),
- a second flange (17) provided at the second end of the central member, the second flange comprising a second inner surface (18), a second outer surface (19), and a second outer edge (20), wherein the second inner surface faces the first inner surface of the first flange, wherein the storage part is configured to accommodate the electric cable on the central member between the first flange and the second flange,
- a cable retainer (21) comprising a bridge section (22) which is provided at a radial distance (D1) outwards from the outer surface of the central member, wherein the bridge section extends over a distance (D2) between the first outer edge and the second outer edge, wherein the cable retainer is configured to be movable in a tangential direction relative to the storage part to a target position (26) and to engage the first plug or the one end of the electric cable with an inner engagement surface (27) of the bridge section when the electric cable is reeled on the storage part, thereby clamping the first plug or the one end of the electric cable between the cable retainer and an underlying cable section (28) of the electric cable in said target position
and
a separate docking member (71), the docking member comprising a base (72) which is configured to be attached to the electric vehicle, in particular to an inside of a trunk of the electric vehicle, the docking member comprising a protruding section (74) which protrudes from the base and which is configured to be inserted into an inner space (75) defined within the central member.

## Patentansprüche

1. Aufrollvorrichtung (1) zur Lagerung eines elektrischen Kabels (2), insbesondere eines elektrischen Kabels eines Fahrzeugs, wie z.B. eines Elektrofahrzeug, wobei das elektrische Kabel einen ersten Stecker (3) an einem Ende (4) des Kabels und einen zweiten Stecker (5) an einem gegenüberliegenden Ende (6) des Kabels umfasst, wobei die Aufrollvorrichtung Folgendes umfasst:
- ein Aufbewahrungsteil (7), das Folgendes umfasst:
- ein zentrales Element (8) mit einer zentralen Achse (9), wobei das zentrale Element eine Außenfläche (10), ein erstes Ende (11) und ein zweites Ende (12) aufweist,
- einen ersten Flansch (13), der am ersten Ende des zentralen Elements vorgesehen ist, wobei der erste Flansch eine erste Innenfläche (14), eine erste Außenfläche (15) und eine erste Außenkante (16) aufweist,
- einen zweiten Flansch (17), der am zweiten Ende des zentralen Elements vorgesehen ist, wobei der zweite Flansch eine zweite Innenfläche (18), eine zweite Außenfläche (19) und eine zweite Außenkante (20) umfasst, wobei die zweite Innenfläche der ersten Innenfläche des ersten Flansches gegenüberliegt, wobei das Aufbewahrungsteil so konfiguriert ist, dass es das elektrische Kabel auf dem zentralen Element zwischen dem ersten Flansch und dem zweiten Flansch aufnimmt,
- eine Kabelhalterung (21), wobei die Aufrollvorrichtung **dadurch gekennzeichnet ist, dass** die Kabelhalterung einen Brückenabschnitt (22) umfasst, der an einem radialen Abstand (D1) nach außen von der Außenfläche des zentralen Elements vorgesehen ist, wobei sich der Brückenabschnitt über einen Abstand (D2) zwischen der ersten Außenkante und der zweiten Außenkante erstreckt, wobei die Kabelhalterung so konfiguriert ist, dass sie in einer tangentialen Richtung relativ zu dem Aufbewahrungsteil in eine Zielposition (26) bewegbar ist und den ersten Stecker oder das eine Ende des elektrischen Kabels mit einer inneren Eingriffsfläche (27) des Brückenabschnitts in Eingriff bringt, wenn das elektrische Kabel auf das Aufbewahrungsteil aufgerollt wird, wodurch der erste Stecker oder das eine Ende des elektrischen Kabels zwischen der Kabelhalterung und einem darunter liegenden Kabelabschnitt (28) des elektrischen Kabels in der genannten Zielposition festgeklemmt ist, wobei die Aufrollvorrichtung ferner **dadurch gekennzeichnet ist, dass** sie Folgendes umfasst
- ein Nabenelement (48), das von dem zentralen Element getragen wird, wobei das Nabenelement und das Lagerteil so konfiguriert sind, dass sie sich relativ zueinander drehen.

2. Aufrollvorrichtung nach Anspruch 1, wobei mindestens ein Teil des Brückenabschnitts die in einer Verstellrichtung (30) senkrecht zur Mittelachse des zentralen Elements verstellbar ist, um den radialen Abstand (D1) zwischen der Außenfläche von dem zentralen Element und die innere Eingriffsfläche des Kabelhalters verschiedener Arten von elektrischen Kabeln oder deren Steckern festzuklemmen.

3. Aufrollvorrichtung nach Anspruch 2, wobei der Brückenabschnitt einen Brückenbalken (31) umfasst und ein Einstellelement (32), das mit dem Brückenträger verbunden ist, wobei das Einstellelement die innere Eingriffsfläche aufweist und in einer radialen Richtung (34) relativ zu dem Brückenträger beweglich ist, um den radialen Abstand (D1) zwischen der Außenfläche des zentralen Elements und der inneren Eingriffsfläche einzustellen.

4. Aufrollvorrichtung nach einem der vorhergehenden Ansprüche, wobei das zentrale Element, das Nabenelement und die Kabelhalterung unabhängig voneinander um die zentrale Achse drehbar sind.

5. Aufrollvorrichtung nach einem der vorhergehenden Ansprüche, wobei das Nabenelement im Inneren des zentralen Elements angeordnet ist und koaxial mit dem zentralen Element angeordnet ist.

6. Aufrollvorrichtung nach einem der vorhergehenden Ansprüche, wobei die Kabelhalterung ein radiales Element (49) umfasst, das mit dem Nabenelement verbunden ist und sich von dem Nabenelement radial nach außen erstreckt, und wobei das radiale Element den Brückenabschnitt trägt.

7. Aufrollvorrichtung nach einem der vorhergehenden Ansprüche, wobei der Brückenabschnitt eine Brücke zwischen der ersten Außenkante und der zweiten Außenkante bildet, wobei die Brücke vollständig geschlossen ist oder wobei ein Spalt zwischen dem Brückenabschnitt und der ersten und/oder zweiten Außenkante definiert ist.

8. Aufrollvorrichtung nach einem der vorhergehenden Ansprüche, wobei in dem zweiten Flansch eine Aussparung (61) vorgesehen ist, die sich von der zweiten Außenkante nach innen erstreckt.

9. Aufrollvorrichtung nach dem vorhergehenden Anspruch, wobei die Aussparung eine Tiefe (d) aufweist, die mindestens gleich 50% einer Höhe (h) des zweiten Flansches ist.

10. Aufrollvorrichtung nach einem der vorhergehenden Ansprüche, wobei an dem zweiten Flansch eine Stopfenhalteeinheit (64) vorgesehen ist, die ausgebildet ist zum Aufnehmen und Halten zumindest eines Teils des zweiten Steckers oder des gegenüberliegenden Endes des elektrischen Kabels.

11. Aufrollvorrichtung nach dem vorhergehenden Anspruch, wobei die Stopfenhalteeinheit ein Loch (66) mit einer Lochachse (67) aufweist, die im Wesentlichen senkrecht zur Mittelachse ausgerichtet ist, wobei das Loch eine zu einer Form des zweiten Stopfens komplementäre Form aufweist.

12. Aufrollvorrichtung nach einem der vorhergehenden Ansprüche, wobei ein erstes Griffelement (70) an der zweiten Außenfläche des zweiten Flansches vorgesehen ist, wobei sich das erste Griffelement von der zweiten Außenfläche nach außen erstreckt, wobei das erste Griffelement so konfiguriert ist, dass es vom Benutzer in Eingriff genommen wird und eine Drehung des Aufbewahrungsteils um die Mittelachse erleichtert.

13. Aufrollvorrichtung nach einem der vorhergehenden Ansprüche, wobei das Nabenelement ein zweites Griffelement (83) umfasst, wobei das zweite Griffelement so konfiguriert ist, dass es vom Benutzer ergriffen werden kann.

14. Aufrollvorrichtung nach dem vorhergehenden Anspruch, wobei das zweite Griffelement ein Element (84) umfasst, das sich von einem Abschnitt (85) des Nabenelements zu einem gegenüberliegenden Abschnitt (86) des Nabenelements erstreckt.

15. Anordnung (100) einer Aufrollvorrichtung (1) zur Aufbewahrung eines elektrischen Kabels (2), insbesondere eines elektrischen Kabels eines Fahrzeugs, wie eines Elektrofahrzeugs, wobei das elektrische Kabel einen ersten Stecker (3) an einem Ende (4) des Kabels und einen zweiten Stecker (5) an einem gegenüberliegenden Ende (6) des Kabels umfasst, wobei die Aufrollvorrichtung Folgendes umfasst:
- ein Aufbewahrungsteil (7), das Folgendes umfasst:
- ein zentrales Element (8) mit einer zentralen Achse (9), wobei das zentrale Element eine Außenfläche (10), ein erstes Ende (11) und ein zweites Ende (12) aufweist,
- einen ersten Flansch (13), der am ersten Ende des zentralen Elements vorgesehen ist, wobei der erste Flansch eine erste Innenfläche (14), eine erste Außenfläche (15) und eine erste Außenkante (16) aufweist,
- einen zweiten Flansch (17), der am zweiten Ende des zentralen Elements vorgesehen ist, wobei der zweite Flansch eine zweite Innenfläche (18), eine zweite Außenfläche (19) und eine zweite Außenkante (20) aufweist, wobei die zweite Innenfläche der ersten Innenfläche des ersten Flansches gegenüberliegt, wobei das Lagerteil so konfiguriert ist, dass es das elektrische Kabel auf dem zentralen Element zwischen dem ersten Flansch und dem zweiten Flansch aufnimmt,
- eine Kabelhalterung (21) mit einem Brückenabschnitt (22), der in einem radialen Abstand (D1) nach außen von der Außenfläche des zentralen Elements vorgesehen ist, wobei sich der Brückenabschnitt über einen Abstand (D2) zwischen der ersten Außenkante und der zweiten Außenkante erstreckt, wobei der Kabelhalter so konfiguriert ist, dass er in einer tangentialen Richtung relativ zu dem Aufbewahrungsteil in eine Zielposition (26) bewegbar ist und den ersten Stecker oder das eine Ende des elektrischen Kabels mit einer inneren Eingriffsfläche (27) des Brückenabschnitts in Eingriff bringt, wenn das elektrische Kabel auf dem Aufbewahrungsteil aufgerollt wird, wodurch der erste Stecker oder das eine Ende des elektrischen Kabels zwischen dem Kabelhalter und einem darunter liegenden Kabelabschnitt (28) des elektrischen Kabels in der Zielposition festgeklemmt wird
und
ein separates Andockelement (71), wobei das Andockelement eine Basis (72) umfasst, die so konfiguriert ist, dass es an dem Elektrofahrzeug, insbesondere an der Innenseite eines Kofferraums des Elektrofahrzeugs, angebracht werden kann, wobei das Andockelement einen vorstehenden Abschnitt (74) umfasst, der von der Basis vorsteht und so konfiguriert ist, dass er in einen innerhalb des zentralen Elements definierten Innenraum (75) eingeführt werden kann .

## Revendications

1. Dispositif d'enroulement (1) pour stocker un câble électrique (2), en particulier un câble électrique d'un véhicule tel qu'un véhicule électrique, ledit câble électrique comprenant une première fiche (3) à une extrémité (4) du câble et une deuxième fiche (5) à une extrémité opposée (6) du câble, le dispositif d'enroulement comprenant :
- une partie de stockage (7) comprenant :
- un élément central (8) ayant un axe central (9), dans lequel l'élément central comprend une surface externe (10), une première extrémité (11) et une deuxième extrémité (12),
- une première collerette (13) située à la première extrémité de l'élément central, la première collerette comprenant une première surface interne (14), une première surface externe (15) et un premier bord externe (16),
- une deuxième collerette (17) située à la deuxième extrémité de l'élément central, la deuxième collerette comprenant une deuxième surface interne (18), une deuxième surface externe (19) et un deuxième bord externe (20), dans lequel la deuxième surface interne fait face à la première surface interne de la première collerette, dans lequel la partie de stockage est configurée pour accueillir le câble électrique sur l'élément central entre la première collerette et la deuxième collerette,
- un dispositif de retenue du câble (21), le dispositif d'enroulement étant **caractérisé en ce que** le dispositif de retenue du câble comprend une section de pont (22) qui est fournie à une distance radiale (D1) vers l'extérieur de la surface externe de l'élément central, dans lequel la section de pont s'étend sur une distance (D2) entre le premier bord externe et le deuxième bord externe, dans lequel le dispositif de retenue de câble est configuré pour être mobile dans une direction tangente à la partie de stockage jusqu'à une position cible (26) et pour engager la première fiche ou l'extrémité du câble électrique avec une surface d'engagement interne (27) de la section de pont lorsque le câble électrique est enroulé sur la partie de stockage, serrant ainsi la première fiche ou l'extrémité du câble électrique entre le dispositif de retenue du câble et une section de câble sous-jacente (28) du câble électrique dans ladite position cible, le dispositif d'enroulement étant en outre **caractérisé en ce qu'**il comprend
- un élément de moyeu (48) supporté par l'élément central, l'élément de moyeu et la partie de stockage étant configurés pour tourner l'un par rapport à l'autre.

2. Dispositif d'enroulement selon la revendication 1, dans lequel au moins une partie de la section du pont est réglable dans une direction de réglage (30) perpendiculaire à l'axe central de l'élément central, pour ajuster la distance radiale (D1) entre la surface externe de l'élément central et la surface interne d'engagement du dispositif de retenue de câble pour serrer différents types de câbles électriques ou de fiches de ceux-ci.

3. Dispositif d'enroulement selon la revendication 2, dans lequel la section de pont comprend une poutre de pont (31) et un élément de réglage (32) qui est connecté à la poutre de pont, dans lequel l'élément de réglage comprend la surface interne d'engagement et est mobile dans une direction radiale (34) par rapport à la poutre de pont pour régler la distance radiale (D1) entre la surface externe de l'élément central et la surface interne d'engagement.

4. Dispositif d'enroulement selon l'une quelconque des revendications précédentes, dans lequel l'élément central, l'élément de moyeu et le dispositif de retenue de câble peuvent tourner indépendamment l'un par rapport à l'autre autour de l'axe central.

5. Dispositif d'enroulement selon l'une quelconque des revendications précédentes, dans lequel l'élément de moyeu est situé à l'intérieur de l'élément central et est disposé coaxialement à l'élément central.

6. Dispositif d'enroulement selon l'une quelconque des revendications précédentes, dans lequel le dispositif de retenue du câble comprend un élément radial (49) qui est relié à l'élément de moyeu et s'étend radialement vers l'extérieur à partir de l'élément de moyeu, et dans lequel l'élément radial supporte la section de pont.

7. Dispositif d'enroulement selon l'une quelconque des revendications précédentes, dans lequel la section de pont forme un pont entre le premier bord externe et le deuxième bord externe, dans lequel le pont est complètement fermé ou dans lequel un espace est défini entre la section de pont et le premier et/ou le deuxième bord externe.

8. Dispositif d'enroulement selon l'une quelconque des revendications précédentes, dans lequel un renfoncement (61) est prévu dans la deuxième collerette, le renfoncement s'étendant vers l'intérieur à partir du deuxième bord externe.

9. Dispositif d'enroulement selon la revendication précédente, dans lequel le renfoncement a une profondeur (d) qui est au moins égale à 50% d'une hauteur (h) de la deuxième collerette.

10. Dispositif d'enroulement selon l'une quelconque des revendications précédentes, dans lequel une unité de retenue de fiche (64) est prévue sur la deuxième collerette, l'unité de retenue de fiche étant configurée pour accueillir et maintenir au moins une partie de la deuxième fiche ou l'extrémité opposée du câble électrique.

11. Dispositif d'enroulement selon la revendication précédente, dans lequel l'unité de retenue de la fiche comprend un trou (66) ayant un axe de trou (67) qui est orienté sensiblement perpendiculairement à l'axe central, dans lequel le trou a une forme complémentaire à une forme de la deuxième fiche.

12. Dispositif d'enroulement selon l'une quelconque des revendications précédentes, dans lequel un premier élément de poignée (70) est prévu sur la deuxième surface externe de la deuxième collerette, le premier élément de poignée s'étendant vers l'extérieur à partir de la deuxième surface externe, dans lequel le premier élément de poignée est configuré pour être engagé par l'utilisateur et pour faciliter une rotation de la partie de stockage autour de l'axe central.

13. Dispositif d'enroulement selon l'une quelconque des revendications précédentes, dans lequel l'élément de moyeu comprend un deuxième élément de poignée (83), le deuxième élément de poignée étant configuré pour être engagé par l'utilisateur.

14. Dispositif d'enroulement selon la revendication précédente, dans lequel le deuxième élément de poignée comprend un élément (84) s'étendant d'une section (85) de l'élément de moyeu à une section opposée (86) de l'élément de moyeu.

15. Assemblage (100) d'un dispositif d'enroulement (1) pour stocker un câble électrique (2), en particulier un câble électrique d'un véhicule tel qu'un véhicule électrique, ledit câble électrique comprenant une première fiche (3) à une extrémité (4) du câble et une deuxième fiche (5) à une extrémité opposée (6) du câble, le dispositif d'enroulement comprenant :
- une partie de stockage (7) comprenant :
- un élément central (8) ayant un axe central (9), dans lequel l'élément central comprend une surface externe (10), une première extrémité (11) et une deuxième extrémité (12),
- une première collerette (13) située à la première extrémité de l'élément central, la première collerette comprenant une première surface interne (14), une première surface externe (15) et un premier bord externe (16),
- une deuxième collerette (17) située à la deuxième extrémité de l'élément central, la deuxième collerette comprenant une deuxième surface interne (18), une deuxième surface externe (19) et un deuxième bord externe (20), dans lequel la deuxième surface interne fait face à la première surface interne de la première collerette, dans lequel la partie de stockage est configurée pour accueillir le câble électrique sur l'élément central entre la première collerette et la deuxième collerette,
- un dispositif de retenue du câble (21) comprenant une section de pont (22) qui est fournie à une distance radiale (D1) vers l'extérieur de la surface externe de l'élément central, dans lequel la section de pont s'étend sur une distance (D2) entre le premier bord externe et le deuxième bord externe, dans lequel le dispositif de retenue de câble est configuré pour être mobile dans une direction tangente à la partie de stockage jusqu'à une position cible (26) et pour engager la première fiche ou l'extrémités de la partie centrale première fiche ou l'extrémité du câble électrique avec une surface d'engagement interne (27) de la section de pont lorsque le câble électrique est enroulé sur la partie de stockage, serrant ainsi la première fiche ou l'extrémité de câble électrique entre le dispositif de retenue de câble et une section de câble sous-jacente (28) du câble électrique dans ladite position cible, et
un élément d'arrimage séparé (71), l'élément d'arrimage comprenant une base (72) qui est configurée pour être fixée au véhicule électrique, en particulier à un intérieur d'un coffre du véhicule électrique, l'élément d'arrimage comprenant une section saillante (74) qui dépasse de la base et qui est configurée pour être insérée dans un espace intérieur (75) défini à l'intérieur de l'élément central.
